# EUROPÄISCHE PATENTANMELDUNG

(11) **EP 2 574 770 A2**
(43) Veröffentlichungstag der Anmeldung: **03.04.2013**
(21) Anmeldenummer: 12006710.3
(22) Anmeldetag: 26.09.2012
(51) Int. Cl.: F03B 1/00, F03B 11/00, F03B 15/20

(54) **Freistrahlturbine**

(30) Priorität: 30.09.2011 DE 102011114708
(71) Anmelder: ROBERT BOSCH GMBH, 70442 Stuttgart (DE)
(72) Erfinder: Scharmann, Nik, 74321 Bietigheim - Bissingen (DE); Groß-Weege, Christopher Andreas, 52074 Aachen (DE); Kamizuru, Yukio, 52064 Aachen (DE)
(74) Vertreter: Thürer, Andreas

(57) **Zusammenfassung**

Offenbart ist eine Freistrahlturbine mit einer Turbinenradanordnung und mit einer Düsenanordnung, Die Energie eines von der Düsenanordnung erzeugten Freistrahls ist in kinetische rotatorische Energie der Turbinenradanordnung wandelbar. Eine Auftreffstelle des Freistrahls auf die Turbinenradanordnung ist radial veränderbar oder einstellbar, Damit ist es möglich, bei zunehmender Austrittsgeschwindigkeit der Flüssigkeit den radialen Abstand der Auftreffstelle entsprechend zu vergrößern, und umgekehrt bei abnehmender Austrittsgeschwindigkeit der Flüssigkeit den radialen Abstand der Auftreffstelle zu verkleinern.

Weiterhin ist ein Wellenkraftwerk offenbart, das eine derartige Freistrahlturbine aufweist, und dessen zyklisch variierende Austrittsgeschwindigkeit der Flüssigkeit somit effektiv nutzbar ist.

## Beschreibung

Die Erfindung betrifft eine Freistrahlturbine gemäß dem Oberbegriff des Patentanspruchs 1.

Freistrahlturbinen z.B. Pelton-Turbinen, haben ein Rad mit Schaufeln, auf die ein Strahl einer Flüssigkeit gerichtet wird. Der Strahl wird über eine Düse erzeugt und hat eine hohe Geschwindigkeit. Beim Auftreffen des Strahls auf die Schaufeln wird die kinetische Energie der Flüssigkeit (insbesondere Wasser) auf das Rad übertragen. Die Energie der Flüssigkeit entsteht meistens aus der Umwandlung von potentieller Energie von Wasser, welches aus einem oberhalb der Freistrahlturbine gelegenen Stausee strömt.

Der optimale Betriebszustand, bei dem Pelton-Turbinen einen Wirkungsgrad von 95% erreichen können, stellt sich ein, wenn die Austrittsgeschwindigkeit der Flüssigkeit an der Düse doppelt so groß wie die Umfangsgeschwindigkeit des Rades an der Aufreffstelle des Strahls ist. Eine Änderung dieses Verhältnisses führt zu einem deutlichen Abfall des Wirkungsgrades der Freistrahlturbinen.

Nachteilig an derartigen Freistrahlturbinen ist daher ihre geringe Flexibilität gegen Änderungen der Austrittsgeschwindigkeit, die sich z,B, durch veränderte Druckverhältnisse der Flüssigkeit ergeben können.

Dem gegenüber liegt der Erfindung die Aufgabe zu Grunde, eine Freistrahlturbine zu schaffen, die auch bei variierenden Austrittsgeschwindigkeiten der Flüssigkeit an der Düse einen verbesserten Wirkungsgrad hat.

Diese Aufgabe wird gelöst durch eine Freistrahlturbine mit den Merkmalen des Patentanspruchs 1 und durch einen Wellenkraftwerk mit den Merkmalen des Patentanspruchs 12.

Die erfindungsgemäße Freistrahlturbine hat eine Turbinenradanordnung und eine Düsenanordnung. Die Energie eines aus der Düsenanordnung austretenden Freistrahls ist in kinetische rotatorische Energie der Turbinenradanordnung wandelbar, Eine Auftreffstelle des Freistrahls auf die Turbinenradanordnung ist radial veränderbar oder einstellbar. Damit ist es möglich, bei zunehmender Austrittsgeschwindigkeit der Flüssigkeit den radialen Abstand der Auftreffstelle von einer Drehachse der Turbinenradanordnung zu vergrößern, und umgekehrt bei abnehmender Austrittsgeschwindigkeit der Flüssigkeit den radialen Abstand der Auftreffstelle zu verkleinern. Somit ist eine Freistrahlturbine geschaffen, deren Wirkungsgrad auch bei variierenden Austrittsgeschwindigkeiten der Flüssigkeit an der Düsenanordnung verbessert ist.

Weitere vorteilhafte Ausgestaltungen der Erfindung sind in den abhängigen Patentansprüchen beschrieben.

Die Turbinenradanordnung kann insbesondere aus einer oder aus mehreren Pelton-Turbinen gebildet sein.

Bei eine bevorzugten Weiterbildung hat die Düsenanordnung zwei oder mehr Düsen, die einzeln aktiviert bzw. deaktiviert und geregelt werden können. Damit sind verschiedene radial zueinander beabstandete Auftreffstellen an der Turbinenradanordnung erzeugbar.

Bei einer besonders bevorzugten Weiterbildung hat die Turbinenradanordnung zwei oder mehr - insbesondere über eine gemeinsame Abtriebswelle - aneinander gekoppelte Turbinenräder mit verschiedenen Radien. Jedem Turbinenrad ist eine Düse zugeordnet, deren jeweilige Auftreffstelle radial an das zugeordnete Turbinenrad - insbesondere an seinen Radius - angepasst ist. Damit sind mehrere herkömmliche Freistrahlturbinen verschiedener Größen mit jeweils einer zugeordneten Düse verwendbar.

Bei einer anderen kompakten Weiterbildung hat die Turbinenradanordnung nur ein Turbinerad, dem die verschiedenen Düsen zugeordnet sind, wobei die verschiedenen Auftreffstellen der von den Düsen erzeugten Freistrahle radial zueinander beabstandet sind.

Bei einer anderen besonders kompakt bauenden Weiterbildung hat die Turbinenradanordnung nur ein Turbinenrad und nur eine zugeordnete Düse. Dabei ist die Auftreffstelle des von der Düse erzeugten Freistrahls radial einstellbar.

Dazu kann die Düse radial bewegbar oder schwenkbar sein.

Insbesondere bei den Weiterbildungen mit vorbestimmten zueinander gestuft beabstandeten Auftreffstellen aber auch bei den Weiterbildungen mit stufenloser Verstellung der Auftreffstelle wird es bevorzugt, wenn das Turbinenrad mehrere am Umfang verteilte Hauptschaufeln hat, wobei jede Hauptschaufel zwei oder mehr radial zueinander beabstandete Schaufelabschnitte hat. Diese können konkav oder muldenförmig geformt sein. Damit ist die Umwandlung der Energie der Flüssigkeit in die kinetische Energie des Turbinenrades verbessert.

Insbesondere bei den Weiterbildungen mit vorbestimmten zueinander gestuft beabstandeten Auftreffstellen aber auch bei den Weiterbildungen mit stufenloser Verstellung der Auftreffstelle wird es alternativ bevorzugt, wenn das Turbinenrad mehrere am Umfang verteilte Schaufeln hat, die unterschiedliche radiale Abstände haben. Diese können ebenfalls konkav oder muldenförmig geformt sein. Auch damit ist die Umwandlung der Energie der Flüssigkeit in die kinetische Energie des Turbinenrades verbessert.

Die Düse kann seitlich zum Turbinenrad versetzt sein, so dass der Freistrahl auch mit einer seitlichen axialen Richtungskomponente auf das Turbinenrad trifft. Damit können insbesondere die Schaufelabschnitte oder die Schaufeln mit geringerem radialem Abstand besser vom Freistrahl getroffen werden, ohne dass weiter außen angeordnete Schaufelabschnitte oder Schaufeln den Freistrahl behindern. Damit ist der Wirkungsgrad der erfindungemäßen Freistrahlturbine bei den geringen Austrittsgeschwindigkeiten bzw. bei den geringen radialen Abständen verbessert.

Die Freistrahlturbine kann in einem Kraftwerk eingesetzt sein und die Turbinenradanordnung zur Erzeugung von elektrischem Strom an einen Generator koppelbar sein.

Dabei kann ein an den Generator angeschlossener Frequenzumrichter von Vorteil sein.

Bei einer besonders bevorzugten Weiterbildung hat die Freistrahlturbine eine elektronische Regelung, über die die Düsenanordnung automatisch derart steuerbar ist, dass bei zunehmender Austrittsgeschwindigkeit der Flüssigkeit der radiale Abstand der Auftreffstelle vergrößert wird, und dass bei abnehmender Austrittsgeschwindigkeit der Flüssigkeit der radiale Abstand der Auftreffstelle verkleinert wird, Je nach Ausführungsform der Freistrahlturbine können dazu entweder die Freistrahldüsen geöffnet und geschlossen werden, oder die einzige Freistrahldüse wird verfahren oder verschwenkt. Die elektronische Regelung ist vorzugsweise über eine Signalleitung mit einem Drehzahlsensor der Turbinenradanordnung verbunden und hat die Radien der verschiedenen Auftreffstellen gespeichert. Damit kann die erfindungsgemäße Freistrahlturbine stets möglicht nahe am optimalen Betriebszustand betrieben werden. Dieser ist dann gegeben, wenn die Austrittsgeschwindigkeit der Flüssigkeit an der Düse doppelt so groß ist wie die Umfangsgeschwindigkeit des Rades an der Auftreffstelle.

Das erfindungsgemäße Wellenkraftwerk hat zumindest einen Wellenenergiekonverter, der eine vorbeschriebene Freistrahlturbine - insbesondere ihre Düsenanordnung - mit Flüssigkeit versorgt. Damit ist es möglich, bei schwankenden Austrittsgeschwindigkeiten den radialen Abstand der Auftreffstelle entsprechend zu verändern. Derartige Schwankungen der Austrittsgeschwindigkeit ergeben sich durch die zyklischen Leistungsschwankungen der Wellenbewegung. Somit ist ein Wellenkraftwerk geschaffen, dessen Wirkungsgrad verbessert ist.

Vorzugsweise hat das Wellenkraftwerk mehrere Wellenenerglekonverter, die über eine gemeinsame Pipeline mit der Düsenanordnung verbunden sind. Damit sind die Flüssigkeitsströme der verschiedenen Wellenenergiekonverter überlagert und beaufschlagen die Düsenanordnung vergleichmäßigt. Damit ist der mechanische Aufwand für die Verstellung der Düsenanordung verringert.

Bei einer vorrichtungstechnisch besonders einfachen Weiterbildung des Wellenkraftwerks ist die Flüssigkeit Meerwasser, das direkt vom Wellenenergiekonverter zur Turbinenradanordnung gefördert wird.

Im Folgenden werden anhand der Figuren verschiede Ausführungsbeispiele der Erfindung detailliert beschrieben. Es zeigen:
Figur 1 ein erstes Ausführungsbeispiel einer erfindungsgemäßen Pelton-Turbine in einer seitlichen geschnittenen Darstellung;
Figur 2 ein zweites Ausführungsbeispiel einer erfindungsgemäßen Pelton-Turbine in einer seitlichen schematischen Darstellung;
Figur 3 ein drittes Ausführungsbeispiel einer erfindungsgemäßen Pelton-Turbine in einer seitlichen schematischen Darstellung;
Figur 4 ein viertes Ausführungsbeispiel einer erfindungsgemäßen Pelton-Turbine in einer Draufsicht;
Figur 5 das vierte Ausführungsbeispiel einer erfindungsgemäßen Pelton-Turbine in einer seitlichen schematischen Darstellung; und
Figur 6 ein Ausführungsbeispiel eines erfindungsgemäßen Wollenkraftwerks mit einem fünften Ausführungsbeispiel einer erfindungsgemäßen Palton-Turbine in einer schematischen Draufsicht.

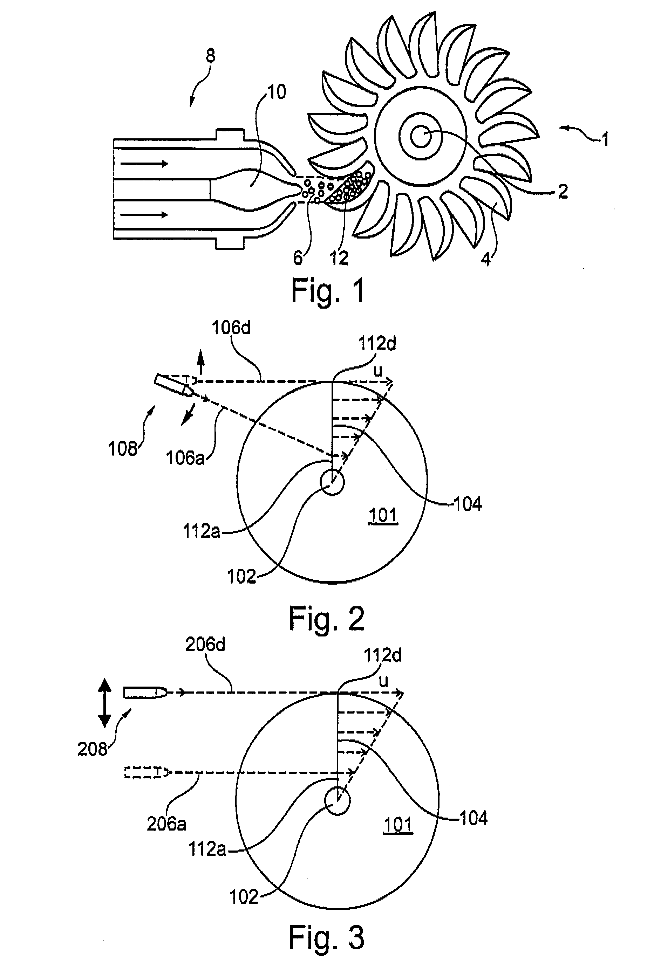

Figur 1 zeigt ein erstes Ausführungsbeispiel einer erfindungsgemäßen Pelton-Turbine in einer seitlichen geschnittenen Darstellung. Sie hat im Wesentlichen ein Turbinenrad 1, das an einer Abtriebswelle 2 befestigt ist. Am Umfang des Turbinenrades 1 ist eine Vielzahl von sich radial erstreckenden konkav gekrümmten Schaufeln 4 angeordnet. Auf diese Schaufeln 4 ist ein aus einer Flüssigkeit (z. B. Wasser) bestehender Freistrahl 6 gerichtet, der von einer Düse 8 erzeugt wird. Die Düse 8 hat eine Düsennadel 10, über die der Volumenstrom des Freistrahls 6 gesteuert werden kann.

Beim Auftreffen des Freistrahls 6 auf die jeweilige Schaufel 4 bildet sich ein Auftreffbereich, dessen Mittelpunkt im Folgenden als Auftreffstelle 12 bezeichnet wird. Der radiale Abstand der Auftreffstelle 12 zur Abtriebswelle 2 ist erfindungsgemäß veränderbar, wie im Folgenden genauer erläutert wird.

Figur 2 zeigt ein zweites Ausführungsbeispiel einer erfindungsgemäßen Pelton-Turbine in einer seitlichen schematischen Darstellung. Ihr Turbinenrad 101 hat vergleichsweise lange Schaufeln, von denen nur eine sich radial von einer Abtriebswelle 102 nach oben erstreckende Schaufel 104 schematisch dargestellt ist. Mit fünf beispielhaften gestrichelten Pfeilen ist eine Verteilung der Umfangsgeschwindigkeit u an verschiedenen Auftreffstellen 112a, 112d der Schaufel 104 dargestellt.

Eine Düse 108, deren Freistrahl 106a, 106d auf die Schaufel 104 gerichtet ist, ist (gemäß den beiden Pfeilen) derart schwenkbar, dass sich eine stufenlose Verstellmöglichkeit ihres Freistrahls 106a, 106d ergibt. Bei einer vergleichsweise geringen Austrittsgeschwindigkeit des Freistrahls 106a, wird die Düse 108 derart geschwenkt, dass sich eine wellennahe Auftreffstelle 112a auf der Schaufel 104 nahe der Abtriebswelle 102 ergibt, während bei einer vergleichsweise hohen Austrittsgeschwindigkeit des Freistrahls 106d eine Einstellung des Schwenkwinkels der Düse 108 derart vorgesehen ist, dass sich eine Auftreffstelle 112d mit vergleichsweise großem radialen Abstand zur Abtriebswelle 102 ergibt.

Figur 3 zeigt ein drittes Ausführungsbeispiel einer erfindungsgemäßen Petton-Turbine in einer seitlichen schematischen Darstellung. Dabei ist der wesentliche Unterschied zum zweiten Ausführungsbeispiel gemäß Figur 2 darin zu sehen, dass eine Düse 208 gemäß dem Doppelpfeil (in Figur 3) zur Veränderung einer Auftreffstelle 112a, 112d auf der Schaufel 104 radial verfahrbar ist. Dies geschieht derart, dass bei einer vergleichsweise geringen Austrittsgeschwindigkeit des Freistrahls 206a die Auftreffstelle 112a ergibt, während sich bei vergleichsweise hoher Austrittsgeschwindigkeit des Freistrahls 206d die Auftreffstelle 112d ergibt.

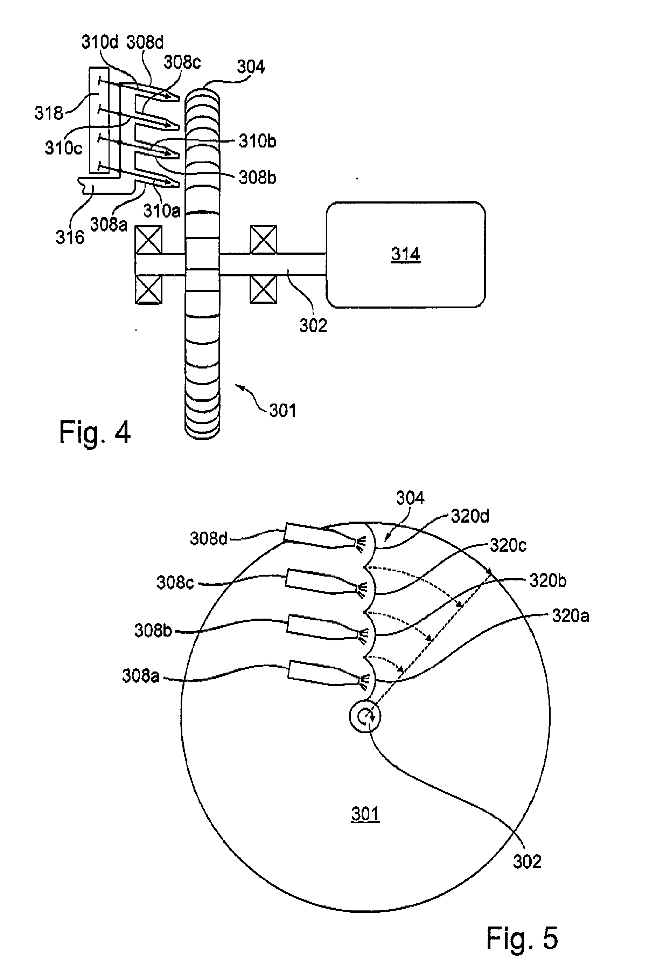

Figur 4 zeigt ein viertes Ausführungsbeispiel einer erfindungsgemäßen Pelton-Turbine in einer Draufsicht. Ihr Turbinenrad 301 ist über eine Abtriebswelle 302 an einen Generator 314 gekoppelt. Seitlich am Turbinenrad 301 bzw. mit einem geringen Abstand entlang der Abtriebswelle 302 ist eine Düsenanordnung mit vier verschiedenen Düsen 308a - 308d vorgesehen, die über eine gemeinsame Druckleitung 316 versorgt werden. Jeweilige Düsennadeln 310a - 310d werden von einer elektronischen Steuereinheit 318 des vierten Ausführungsbeispiels gesteuert. Dabei wird stets eine der vier Düsen 308a - 308d geöffnet, während die drei anderen Düsen 308a - 308d geschlossen werden.

Figur 5 zeigt das vierte Ausführungsbeispiel gemäß Figur 4 in einer seitlichen schematischen Darstellung. Dabei ist zu erkennen, dass die Schaufeln, von denen in Figur 5 nur eine Schaufel 304 dargestellt ist, in vier Schaufelabschnitte 320a - 320d untergliedert ist, die jeweils einen unterschiedlichen Abstand zur Abtriebswelle 302 des Turbinenrades 301 haben. Die vier Schaufelabschnitte 320a - 320d sind jeweils konkav und muldenförmig ausgebildet. Jeder Schaufelabschnitt 320a - 320d bildet eine Auftreffstelle für den jeweiligen Freistrahl der zugeordneten Düse 308a - 308d.

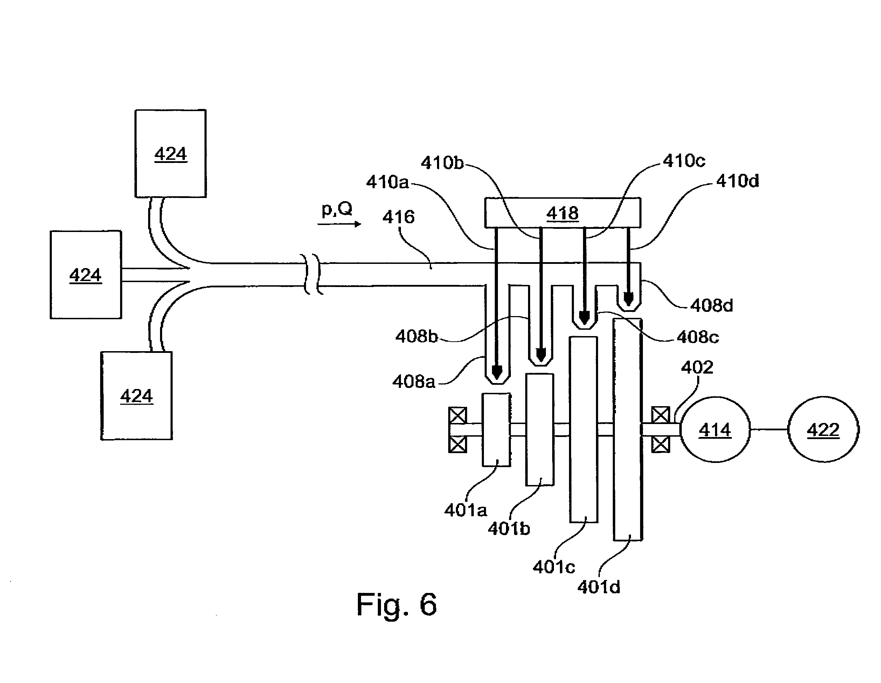

Figur 6 zeigt ein fünftes Ausführungsbeispiel einer erfindungsgemäßen Pelton-Turbine bei einer Anwendung in einem Wellenkraftwerk. An einer Abtriebswelle 402 sind vier axial zueinander beabstandete Turbinenräder401a, 401b, 401c, 401d angeordnet, die verschiedene Größen bzw. Radien aufweisen. Die Energie der gemeinsamen Abtriebswelle 402 wird über einen Generator 414 in elektrische Energie gewandelt und über einen Frequenzumrichter 422 gewandelt.

Jedem Turbinenrad 401a - 401d ist eine Düse 408a - 408d zugeordnet, deren jeweilige Düsennadel 410a - 410d von einer gemeinsamen elektronischen Steuereinheit 418 gesteuert (insbesondere geöffnet und geschlossen) werden kann. Die gemeinsame Druckleitung 416 des fünften Ausführungsbeispiels wird von drei Wellenenergiekonvertern 424 versorgt, die zyklisch Meerwasser in die Druckleitung 416 pumpen. Durch eine gewisse räumliche Streuung der Wellenenerglekonverter 424 im Meer ist der gemeinsam erzeugte Meerwasserstrom in der Druckleitung 416 gegenüber dem Meerwasserstrom eines einzelnen Wellenenergiekonverters 424 bereits in gewissem Maße vergleichmäßigt. Verbleibende Unregelmäßigkeiten der Strömungsgeschwindigkeit des Meerwassers führen erfindungsgemäß zur Aktivierung derjenigen Kombination aus Turbinenrad 401a - 401d und Düse 408a - 408d, die den jeweils besten Wirkungsgrad bietet.

Offenbart ist eine Freistrahlturbine mit einer Turbinenradanordnung und mit einer Düsenanordnung. Die Energie eines von der Düsenanordnung erzeugten Freistrahls ist in kinetische rotatorische Energie der Turbinenradanordnung wandelbar. Eine Auftreffstelle des Freistrahls auf die Turbinenradanordnung ist radial veränderbar oder einstellbar. Damit ist es möglich, bei zunehmender Austrittsgeschwindigkeit der Flüssigkeit den radialen Abstand der Auftreffstelle entsprechend zu vergrößern, und umgekehrt bei abnehmender Austrittsgeschwindigkeit der Flüssigkeit den radialen Abstand der Auftreffstelle zu verkleinern.

Weiterhin ist ein Wellenkraftwerk offenbart, das eine derartige Freistrahlturbine aufweist, und dessen zyklisch variierende Austrittsgeschwindigkeit der Flüssigkeit bzw. des Flüssigkeitsstrahls somit effektiv nutzbar ist.

### Bezugszeichenliste

- 1; 101; 301: Turbinenrad
- 2; 102; 302; 402: Abtriebswelle
- 4; 104; 304: Schaufel
- 6: Freistrahl
- 8; 108; 208: Düse
- 10: Düsennadel
- 12; 112a, 112d: Auftreffstelle
- 106a; 206a: langsamer Freistrahl
- 106d; 206d: schneller Freistrahl
- 308a, 308b, 308c, 308d: Düse
- 310a, 310b, 310c, 310d: Düsennadel
- 314; 414: Generator
- 316; 416: Druckleitung
- 318; 418: Steuereinheit
- 320a, 320b, 320c, 320d: Schaufelabschnitte
- 401 a, 401 b, 401 c, 401 d: Turbinenrad
- 408a, 408b, 408c, 408d: Düse
- 410a,410b,410c,410d: Düsennadel
- 422: Frequenzumrichter
- 424: Wellenenerglekonverter

- u: Umfangsgeschwindigkeit

## Patentansprüche

1. Freistrahlturbine mit einer Turbinenradanordnung (1; 101; 301; 401a, 401 b, 401 c, 401d) und mit einer Düsenanordnung (8; 108; 208; 308a, 308b, 308c, 308d; 408a, 408b, 408c, 408d), wobei die Energie eines aus der Düsenanordnung (8; 108; 208; 308a, 308b, 308c, 308d; 408a, 408b, 408c, 408d) austretenden Freistrahls (6; 106a, 106d; 206a, 206d) einer Flüssigkeit in kinetische Energie der Turbinenradanordnung (1; 101; 301; 401a, 401 b, 401c, 401 d) wandelbar ist, **dadurch gekennzeichnet, dass** ein radialer Abstand einer Auftreffstelle (12; 112a, 112d) des Freistrahls (6; 106a, 106d; 206a, 206d) auf die Turbinenradanordnung (1; 101; 301; 401a, 401b, 401c, 401d) änderbar ist.

2. Freistrahlturbine nach Anspruch 1, wobei die Düsenanordnung zwei oder mehr einzeln aktivierbare Düsen (8; 108; 208; 308a, 308b, 308c, 308d; 408a, 408b, 408c, 408d) hat, über die verschiedene radial zueinander beabstandete Auftreffstellen (112a, 112d) erzeugbar sind.

3. Freistrahlturbine nach Anspruch 2, wobei die Turbinenradanordnung zwei oder mehr aneinander gekoppelte Turbinenräder (401 a, 401 b, 401 c, 401 d) verschiedener Radien hat, und wobei jedem Turbinenrad (401 a, 401 b, 401 c, 401 d) eine Düse (408a, 408b, 408c, 408d) zugeordnet ist, deren jeweilige Auftreffstelle radial an den Radius des zugeordnete Turbinenrades (401a, 401b, 401c, 401d) angepasst ist.

4. Freistrahlturbine nach Anspruch 2, wobei die Turbinenradanordnung ein Turbinerad (301) hat, dem die Düsen (308a, 308b, 308c, 308d) zugeordnet sind.

5. Freistrahlturbine nach Anspruch 1, mit einem Turbinerad (1; 101) und mit einer zugeordneten Düse (8; 108; 208), wobei die Auftreffstelle des Freistrahls (6; 106a, 106d; 206a, 206d) auf dem Turbinenrad (1; 101) radial einstellbar ist.

6. Freistrahlturbine nach Anspruch 5, wobei die Düse (208) radial bewegbar ist.

7. Freistrahlturbine nach Anspruch 5 oder 6, wobei die Düse (108) schwenkbar Ist.

8. Freistrahlturbine nach einem der Ansprüche 4 bis 7, wobei das Turbinenrad mehrere am Umfang verteilte Hauptsschaufeln (304) hat, und wobei jede Hauptschaufel (304) zwei oder mehr radial zueinander beabstandete Schaufelabschnitte (320a, 320b, 320c, 320d) hat.

9. Freistrahlturbine nach einem der Ansprüche 4 bis 7, wobei das Turbinenrad mehrere am Umfang verteilte Schaufeln hat, die unterschiedliche radiale Abstände oder Längen haben.

10. Freistrahlturbine nach einem der vorhergehenden Ansprüche, wobei die Turbinenradanordnung (301; 401 a, 401 b, 401 c, 401 d) an einen Generator (314; 414) koppelbar ist,

11. Freistrahlturbine nach einem der vorhergehenden Ansprüche mit einer elektronischen Steuereinheit (318; 418), über die die Düsenanordnung (308a, 308b, 308d; 408a, 408b, 408c, 408d) derart steuerbar ist, dass bei zunehmender Austrittsgeschwindigkeit der Flüssigkeit der radiale Abstand der Auftreffstelle vergrößerbar ist.

12. Wellenkraftwerk mit zumindest einem Wellenenergiekonverter (424), über den eine Freistrahlturbine gemäß einem der vorhergehenden Ansprüche mit Flüssigkeit versorgbar ist.
